# EUROPÄISCHE PATENTSCHRIFT

(11) **EP 1 170 855 B1**
(45) Veröffentlichungstag und Bekanntmachung des Hinweises auf die Patenterteilung: **11.11.2009**
(21) Anmeldenummer: 01116073.6
(22) Anmeldetag: 03.07.2001
(51) Int. Cl.: H02M 7/5387

(54) **Entlastungsnetzwerk**
Discharge circuit
Circuit de décharge

(30) Priorität: 05.07.2000 DE 10032704
(43) Veröffentlichungstag der Anmeldung: 09.01.2002
(73) Patentinhaber: ProMinent Dosiertechnik GmbH, 69123 Heidelberg (DE)
(72) Erfinder: Freudenberger, Thomas, 67069 Ludwigshafen (DE)
(74) Vertreter: Weber, Roland

(56) Entgegenhaltungen:
- US-A- 5 768 114
- US-A- 5 969 959
- SALMON J C: "PWM HYBRID INVERTER DRIVE CIRCUIT TOPOLOGIES THAT EMPLOY A DUAL VOLTAGE AND CURRENT DC-LINK" IEEE TRANSACTIONS ON INDUSTRY APPLICATIONS, IEEE INC. NEW YORK, US, Bd. 30, Nr. 3, 1. Mai 1994 (1994-05-01), Seiten 707-716, XP000459028 ISSN: 0093-9994
- TOMASIN P: "A NOVEL TOPOLOGY OF ZERO-CURRENT SWITCHING VOLTAGE-SOURCE PWM INVERTER FOR HIGH-POWER APPLICATIONS" RECORD OF THE ANNUAL POWER ELECTRONICS SPECIALISTS CONFERENCE (PESC). ATLANTA, JUNE 12 - 15, 1995, NEW YORK, IEEE, US, Bd. 2 CONF. 26, 12. Juni 1995 (1995-06-12), Seiten 1245-1251, XP000548014 ISBN: 0-7803-2731-4
- PATENT ABSTRACTS OF JAPAN vol. 1999, no. 05, 31. Mai 1999 (1999-05-31) & JP 11 041946 A (NISSIN ELECTRIC CO LTD), 12. Februar 1999 (1999-02-12)

## Beschreibung

Die vorliegende Erfindung betrifft ein Entlastungsnetzwerk für eine Umrichterschaltungbestehend aus mindestens einem Halbbrückenstrang, mit einem kapazitiven Element, einer Diode sowie einem induktiven Element, das als Zweipol ausgebildet ist, wobei der Zweipol mit mindestens einem Halbbrückenstrang der Umrichterschaltung in Serie geschaltet ist.

Ein entsprechendes Entlastungsnetzwerk ist beispielsweise bekannt aus der JP 11 041 946. Gemäß dieser Druckschrift ist parallel zu einer Begrenzerspule eine Diode gegenpolig geschaltet und parallel zu der Diode ist neben einem Snubberschaltkreis, der aus einem mit einem Widerstand in Reihe geschalteten Kondensator besteht, noch eine weitere Induktivität mit einem Kondensator parallel geschaltet. Diese sollten den Überstromschutz im Falle eines Kurzschlusses durch Reduzierung des Stromes in der Strombegrenzerspule verbessern.

Weitere Strombegrenzungsschaltkreise, die aus einer Diode und einem induktiven Element bestehen, sind bekannt aus der Zeitschrift ABB Technik 5/98: "IGCT - eine neue, zukunftsweisende Technik für kostengünstige Hochleistungs-Umrichter" von Steimer et al, so wie aus der GB 2 221 806 A und der JP 012 68 458, wobei im Falle der erst genannten Druckschrift zusätzlich ein Widerstand in dem die Diode enthaltenden Teilstrang vorgesehen ist.

Aus der EP 0 379 900 ist ein Halbleiterventil mit Sperrfähigkeit in Rückwärtsrichtung bekannt, bei welchem in Reihe mit dem Halbleiterventil eine Sättigungsdrossel mit einem Paralletwiderstand angeordnet ist. Aus der US 4,570,212 ist ein Entlastungsnetzwerk bekannt, welches als Multipol ausgebildet ist und relativ komplex aus mehreren Dioden, einer Induktivität, einem Snubberschaltkreis und einem mit einer der Dioden in Reihe geschalteten Widerstand besteht.

Allen vorgenannten Lösungen ist gemeinsam, dass Sie keine Energiespeicherung zur Wiedereinspeisung vorsehen, sondern einen Kondensator allenfalls als Pufferspeicher benutzen, dessen gespeicherte Energie jedoch, wenn auch eventuell zeitlich gestreckt, in den Widerständen oder Dioden des Entlastungsnetzwerks verbraucht wird. Ein Teil der vorgenannten Schaltungen sieht keinerlei Kondensator zur Energiespeicherung vor, so dass sich die in der Induktivität gespeicherte Energie mit einer entsprechend langen Zeitkonstanten über die Diode abbaut.

Bekannte Umrichterschaltungen weisen häufig einen oder mehrere Halbbrückenstränge auf, an die jeweils eine Ausgangsleitung angeschlossen ist. Wird die Umrichterschaltung eingangsseitig beispielsweise an eine Gleichspannungsquelle angeschlossen, so kann durch geeignete Ansteuerung der in den Halbbrückensträngen enthaltenen aktiven Elemente an den Ausgangsleitungen eine variable Gleichspannung bzw. eine Wechselspannung mit variabler Frequenz und Amplitude bereit gestellt werden. Solche Umrichterschaltungen kommen beispielsweise bei der Ansteuerung von Motoren, Lüftern oder Pumpen zur Anwendung.

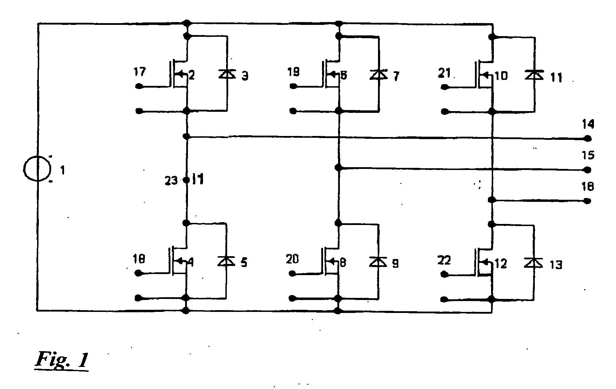

Zur Verdeutlichung ist in Figur 1 eine bekannte Umrichterschaltung aus dem Stand der Technik gezeigt. Abgebildet ist ein dreiphasiger Umrichter, der eingangsseitig an die Gleichspannungsquelle 1 angeschlossen ist und ausgangsseitig die drei Ausgangsleitungen 14, 15 und 16 aufweist. Jede Ausgangsleitung 14, 15 und 16 ist an einen Halbbrückenstrang angeschlossen. Jeder der drei Halbbrückenstränge besteht aus zwei Schaltelementen in Serienschaltung, z. B. MOSFET-Transistoren (MOSFETs), und zwei entsprechenden Dioden in Antiparallelschaltung. Im ersten der drei Halbbrückenstränge (in Figur 1 links angeordnet) ist ein Transistor 2 mit einem Anschluß (Drain) an den positiven Anschluß einer Gleichspannungsquelle 1 und mit einem zweiten Anschluß (Source) an der Ausgangsleitung 14 angeschlossen. Ein weiterer Transistor 4 ist mit einem Anschluß (Drain) an der Ausgangsleitung 14 und mit einem zweiten Anschluß (Drain) an dem negativen Anschluß der Gleichspannungsquelle 1 angeschlossen. Parallel zum Transistor 2 ist eine Diode 3 in umgekehrter Flußrichtung zwischen dem Verbindungspunkt der beiden Transistoren (also der Ausgangsleitung 14) und dem positiven Anschluß der Gleichspannungsquelle 1 angeschlossen. Eine weitere Diode 5 ist parallel zu dem Transistor 4 in umgekehrter Flußrichtung zwischen dem negativen Anschluß der Gleichspannungsquelle 1 und dem Verbindungspunkt der beiden Transistoren (also der Ausgangsleitung 14) angeschlossen. Der zweite und der dritte Halbbrückenstrang ist im Prinzip ebenso aufgebaut. Dabei besteht der zweite der drei Halbbrückenstränge aus den Transistoren 6 und 8, den Dioden 7 und 9 und der Ausgangsleitung 15. Der dritte und letzte der drei Halbbrückenstränge weist die Transistoren 10 und 12, die Dioden 11 und 13 sowie die Ausgangsleitung 16 auf.

Die Funktionsweise der Umrichterschaltung soll im folgenden beschrieben werden. Wird beispielsweise der Transistor 2 mit Hilfe eines Ansteuersignals an Gate 17 eingeschaltet, so wird der an der Ausgangsleitung 14 angeschlossene Verbraucher mit dem positiven Anschluß der Gleichspannungsquelle 1 verbunden. In analoger Weise wird der an der Ausgangsleitung 14 angeschlossene Verbraucher durch Einschalten des Transistors 4 mit Hilfe des Ansteuersignals 18 mit dem negativen Anschluß der Gleichspannungsquelle 1 verbunden. In gleicher Weise kann in den beiden anderen Halbbrückensträngen der Transistor 6 durch das Ansteuersignal 19, der Transistor 8 durch das Ansteuersignal 20, der Transistor 10 durch das Ansteuersignal 21 und der Transistor 12 durch das Ansteuersignal 22 geschaltet werden.

Im folgenden beschränkt sich die Beschreibung der Funktionsweise des bekannten Umrichters auf den ersten Halbbrückenstrang. Es versteht sich, daß alle weiteren Halbbrückenstränge in gleicher Art und Weise verwendet werden können.

Durch das Ansteuern der beiden Transistoren 2 und 4 mit Hilfe der Ansteuersignale 17 und 18 kann an der Ausgangsleitung 14 eine Spannung beliebiger Frequenz erzeugt werden. Das gezeigte Umrichternetzwerk hat jedoch zwei gravierende Nachteile. So ist zum einen beim Betrieb der Umrichterschaltung darauf zu achten, daß die Transistoren 2 und 4 nicht gleichzeitig geschaltet werden, da sonst ein niederohmiger Strompfad von dem positiven Anschluß der Gleichspannungsquelle 1 über die Reihenschaltung der Transistoren 2 und 4 zum negativen Anschluß der Gleichspannungsquelle 1 entsteht. Es würde sich dann ein sehr hoher Strom I1 einstellen, der die Transistoren überlasten und zerstören würde. Aus diesem Grund muß bei jedem Wechsel des Schaltzustandes der Transistoren 2 und 4 ein kurzes Zeitintervall (Sicherheitsintervall) abgewartet werden, während dem sowohl der Transistor 2 als auch der Transistor 4 im Ausschaltzustand gehalten werden. Aufgrund von bauteilbedingten Sperrverzugszeiten kann nämlich der Transistor 2 beispielsweise nicht gleichzeitig mit dem Ausschalten des Transistors 4 eingeschaltet werden. Durch das Sicherheitsintervall wird sichergestellt, daß der ausgeschaltete Transistor wieder im Sperrzustand ist bevor der andere Transistor geschaltet wird. Das Sicherheitsintervall dient lediglich dem Vermeiden des Überlastfalls und ist für das Arbeitsprinzips des Umrichters von Nachteil. Desweiteren haben die eingangs erwähnten, bekannten Entlastungsnetzwerke den Nachteil, dass sie keinerlei Energie für die Wiedereinspeisung in die Umrichterschaltung speichern.

Der zweite Nachteil der beschriebenen Umrichterschaltung besteht darin, daß die Dioden 3 und 5 im allgemeinen nicht ideale Eigenschaften besitzen, so daß beim Umschalten der Transistoren 2 und 4 Schaltverluste auftreten. Wird z. B. zu einem bestimmten Zeitpunkt der Transistor 2 eingeschaltet, bei dem die aktuelle Stromflußrichtung durch den induktiven Anteil der Impedanz des angeschlossenen Verbrauchers von der Ausgangsleitung 14 zum Verbindungspunkt der Transistoren 2 und 4 gerichtet ist, so ist die Diode 3 auf Durchlaß geschaltet, d. h. stromführend. Wird der Transistor 2 ausgeschaltet und anschließend der Transistor 4 eingeschaltet, so entsteht ein niederohmiger Strompfad vom positiven Anschluß der Gleichspannungsquelle 1 über die noch leitende Diode 3 und den Transistor 4 zum negativen Anschluß der Gleichspannungsquelle 1. Der sich einstellende Strom I1 wird im wesentlichen sowohl von der Geschwindigkeit, mit welcher der Transistor 4 eingeschaltet wird als auch von der Geschwindigkeit, mit der die Diode 3 sperrt, bestimmt. Während des kurzen Moments, in dem die Diode 3 noch leitet, fällt die gesamte Spannung der Gleichspannungsquelle 1 über dem Transistor 4 ab und verursacht Schaltverluste entsprechend dem Produkt aus der Spannung der Gleichspannungsquelle 1 und dem Diodensperrstrom. In gleicher Weise entstehen Schaltverluste im Transistor 2, wenn dieser bei zuvor stromführender Diode 5 eingeschaltet wird. Für Spannungen oberhalb von 200V kommt noch erschwerend hinzu, daß die für solche Spannungsbereiche geeigneten Dioden wesentlich längere Sperrverzugszeiten von bis zu 400 ns haben. Mit Rücksicht auf den Diodensperrstrom und die damit verbundenen Verluste müssen die Ein- und Ausschaltgeschwindigkeiten der Transistoren 2 und 4 der Sperrverzugszeit der Dioden 3 und 5 angepaßt werden. Auch diese Begrenzung der Einschaltzeien der Transistoren 2 und 4 bringt für den Betrieb des Umrichters Nachteile in Form von zusätzlichen Schaltverlusten.

Es ist bereits bekannt, diese Nachteile mit Hilfe sogenannter Entlastungsnetzwerke zu beheben. Dabei werden in der Regel sehr komplizierte aus aktiven Bauelementen bestehenden Netzwerke parallel zu den Halbsträngen angeordnet. Die bekannten Entlastungsnetzwerke haben jedoch den Nachteil, daß sie zum einen sehr teuer sind und zum anderen mit einer entsprechend komplizierten Ansteuerlogik versehen werden müssen und/oder insbesondere keine Energierückgewinnung vorsehen.

Der vorliegenden Erfindung liegt daher die Aufgabe zugrunde, ein Entlastungsnetzwerk für eine Umrichterschaltung bereitzustellen, die zuverlässig die oben beschriebenen Nachteile überwindet und gleichzeitig einfach aufgebaut ist, so daß sie kostengünstig verwirklicht werden kann. Insbesondere soll das Entlastungsnetzwerk in der Lage sein, im Falle eines plötzlichen Stromabfalls die in der Spule freiwerdende Energie zu speichern und nach Aufhebung der Unterbrechung an die Umrichterschaltung zurückzuliefern.

Diese Aufgabe wird erfindungsgemäß dadurch gelöst, dass das Entlastungsnetzwerk, abgesehen von Zuleitungswiderständen, keinerlei ohmsche Widerstände enthält.

Der Verzicht auf ohmsche Widerstände bei gleichzeitiger Anordnung von Kondensator und Diode in parallelen Teilsträngen des Entlastungsnetzwerkes ermöglicht es, in die in der Induktivität gespeicherte Energie vorübergehend in dem Kondensator zu speichern, so dass sie anschließend nach Aufheben der Unterbrechung automatisch wieder in die Umrichterschaltung eingespeist wird.

Dabei ist erfindungsgemäß notwendig, daß der Strom, der durch den abzusichernden Teilstrang fließt, durch den Zweipol des Entlastungsnetzwerks fließen muß. Daher muß das Entlastungsnetzwerk nicht notwendigerweise mit der gesamten Umrichterschaltung in Serie geschaltet sein, sofern diese aus mehreren Teilsträngen besteht, es ist vielmehr auch möglich, einen oder mehrere Teilstränge einzeln mit Entlastungsnetzwerken abzusichern, so daß der Zweipol dann mit dem entsprechenden Teilstrang der Umrichterschaltung in Serie geschaltet ist. Im Gegensatz zu den bekannten Entlastungsnetzwerken, die in der Regel parallel zu den Teilsträngen angeordnet sind, kann durch die Erfindung die Verwendung aktiver Elemente, die eine eigene Ansteuerung benötigen, eingeschränkt und in der bevorzugten Ausführungsform sogar völlig vermieden werden.

In einer bevorzugten Ausführungsform des Entlastungsnetzwerks sind das kapazitive Element und die Diode jeweils auf zwei unterschiedlichen parallel verlaufenden Teilsträngen des Entlastungsnetzwerks angeordnet. Dabei dient das kapazitive Element im wesentlichen der Speicherung von elektrischer Energie, die bei einer plötzlichen, starken Stromänderung im Umrichter anfällt.

Mit Vorteil ist das induktive Element durch einen Zwischenabgriff in zwei Teilinduktivitäten aufgeteilt oder das induktive Element besteht aus zwei getrennten entsprechend verschalteten induktiven Elementen. Dabei ist die erste (Teil-)Induktivität in Reihe mit den parallel verlaufenden Teilsträngen des Entlastungsnetzwerks geschaltet, wobei der eine Teilstrang das kapazitive Element aufweist und der andere Teilstrang aus einer Reihenschaltung der Diode mit der zweiten (Teil-)Induktivität besteht. Dabei ist die Diode vorzugsweise derart gepolt, daß bei einem Anstieg des Stromflusses in der Umrichterschaltung ein Stromfluß innerhalb der zweiten (Teil-)Induktivität verhindert wird. Bei einem plötzlichen Anstieg des Stromes durch die Umrichterschaltung wirkt die erste (Teil-)Induktivität einem Ansteigen des Stromes entgegen. Im Falle eines niederohmigen Strompfades fällt dann die gesamte Eingangsspannung des Systems als Summe aus der Spannung der Gleichspannungsquelle und der Spannung des kapazitiven Bauteils über der ersten (Teil-)Induktivität ab. An der zweiten (Teil-)Induktivität tritt die entsprechend dem Verhältnis der Teilinduktivitäten transformierte Spannung auf, so daß die Diode sperrt. Sobald der niederohmige Strompfad durch entsprechendes Schalten der Transistoren in den Teilsträngen des Umrichternetzwerkes aufgehoben wird, verringert sich der Strom durch das Umrichternetzwerk. Da sich in dem induktiven Bauelement der Gesamtstrom nicht sprunghaft ändern kann, fließt dann in der zweiten (Teil-)Induktivität ein Strom, der die Abnahme des Stromes durch die Umrichterschaltung zum Teil kompensiert. Die Differenz der Ströme in den beiden (Teil-)Induktivitäten fließt durch den Teilstrang des Entlastungsnetzwerkes mit dem kapazitiven Element.

Vereinfacht gesprochen kann die Wirkungsweise des erfindungsgemäßen Entlastungsnetzwerks derart beschrieben werden, daß bei jedem Anstieg des Umrichtereingangsstroms die Eingangsspannung des Systems so lange im wesentlichen über der ersten (Teil-)Induktivität abfällt, bis der in der Induktivität ansteigende Strom das neue Niveau des Umrichtereingangsstroms erreicht hat. Hingegen wird bei jeder Abnahme des Umrichtereingangsstroms die überschüssige in der Induktivität gespeicherte Energie in den Kondensator umgeladen. Dabei steht die zusätzliche Energie dem Umrichter als Einspeisenergie zur Verfügung, so daß die Anordnung insgesamt ohne verlustbehaftete Elemente auskommt. Die wirksame Eingangsspannung des Umrichters setzt sich dann aus der Summe der Spannung des kapazitiven Elements mit der Spannung der Gleichspannungsquelle zusammen. Bei konstantem oder sich nur langsam änderndem Strom durch den Umrichter sinken Spannungsabfall und Impedanz des Entlastungsnetzwerks nahezu auf Null ab, da das Netzwerk keinerlei Ohmsche Widerstände (abgesehen von den Zuleitungswiderständen) enthält.

Eine besonders bevorzugte Ausführungsform sieht vor, daß mindestens ein spannungsbegrenzendes Element auf mindestens einem weiteren Teilstrang des Entlastungsnetzwerkes angeordnet ist, der parallel zu den beiden ersten Teilsträngen des Entlastungsnetzwerkes verläuft. Als spannungsbegrenzendes Element kann beispielsweise eine Zenerdiode verwendet werden. Durch das spannungsbegrenzende Element kann die Umrichtereingangsspannung in definierten Grenzen gehalten werden. Durch die Parallelschaltung wird die Spannung an dem kapazitiven Element zu einer oder gegebenenfalls auch zu beiden Polaritäten hin begrenzt.

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren. Es zeigen:
Figur 1 ein Schaltbild einer bekannten Umrichterschaltung aus dem Stand der Technik und
Figur 2 ein Schaltbild der Umrichterschaltung aus Figur 1 erweitert um das erfindungsgemäße Entlastungsnetzwerk.

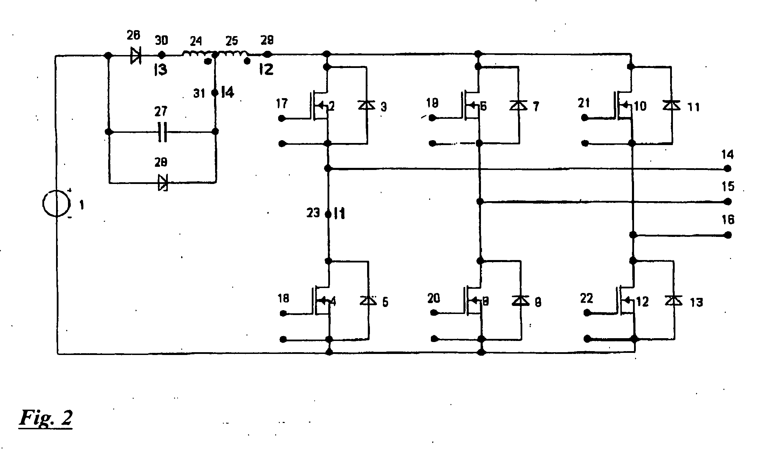

Die Funktionsweise des Umrichters wurde bereits erklärt. In Figur 2 ist das erfindungsgemäße Entlastungsnetzwerk mit dem Umrichter in Reihe geschaltet, so daß der zu begrenzende Strom durch das Entlastungsnetzwerk fließen muß.

Das Entlastungsnetzwerk besteht hier aus einer Begrenzungsdrossel mit zwei Teilwicklungen 24, 25, einer Diode 26, einem Kondensator 27 und einem spannungsbegrenzenden Element, z. B. einer Zenerdiode 28. Die Eingangsspannung U des Umrichters setzt sich in Figur 2 aus der Spannung der Gleichspannungsquelle 1 und der Ladespannung des Kondensators 27 zusammen.

Wie bereits oben ausgeführt, kann es bei einem zu kurzen Sicherheitsintervall passieren, daß kurzzeitig die beiden Transistoren eines Teilstrangs des Umrichters gleichzeitig leitend sind, was zu einer niederohmigen Verbindung führt. Im folgenden soll der Fall einer Überlast und seiner Folgen anhand von den Figuren 1 und 2 erklärt werden. Tritt eine niederohmige Verbindung beispielsweise durch gleichzeitiges Leiten der Transistoren 2 und 4 oder durch die Sperrverzugsdauer z. B. der Diode 3 beim Einschalten des Transistors, auf, so bildet sich in Figur 1 ein schnell ansteigender Strom I1 innerhalb des betreffenden Halbbrückenstrangs (in diesem Fall über die beiden Transistoren 2 und 4). Dies äußert sich ebenfalls in einem schnell ansteigenden Umrichtereingangsstrom I2, der von der Gleichspannungsquelle 1 zu den drei Halbbrückensträngen fließt. In der erfindungsgemäßen Schaltungsanordnung nach Figur 2 wirkt die Begrenzungsdrossel mit der Induktivität der umrichterseitigen Teilwicklung 25 (erste Teilinduktivität) einem Ansteigen des Stroms I2 entgegen. Daher fällt, solange der niederohmige Strompfad durch einen der Teilstränge besteht, die Eingangsspannung des Systems als Summe aus der Spannung der Gleichspannungsquelle 1 und der Spannung des Kondensators 27 im wesentlichen über der umrichterseitigen Drosselteilwicklung 25 ab. An der gleichspannungsseitigen Drosselteilwicklung 24 (zweite Teilinduktivität) tritt die entsprechend dem Verhältnis der Wicklungen der beiden Drosselteilwicklungen transformierte Spannung der umrichterseitigen Drosselteilwicklung 25 auf, so daß die Diode 26 sperrt. Der Umrichtereingangsstrom I2 fließt während dieser Zeit als Strom I4 vom positiven Anschluß der Gleichspannungsquelle 1 über den Kondensator 27, die umrichterseitige Drosselteilwicklung 25 und den betreffenden Halbbrückenstrang, bestehend z. B. aus den Transistoren 2 und 4, zum negativen Anschluß der Gleichspannungsquelle 1. Dies führt dazu, daß die Platte des Kondensators 27, die dem Umrichter zugewandt ist gegenüber der Platte des Kondensators 27, die der Gleichspannung zugewandt ist, in negativer Richtung entladen wird.

Sobald der niederohmige Strompfad unterbrochen wird, verringert sich der Strom I2. Da sich die Summe der Ströme I2 und I3 durch die Induktivitäten nicht sprunghaft ändern kann, fließt dann in der zweiten Drosselteilwicklung 24 ein Strom I3, der zumindest teilweise die Abnahme des Stroms I2 kompensiert. Die Größe des Stroms I3 im Verhältnis zu dem Strom I2 wird durch das Windungszahlenverhältnis zwischen den Teilwicklungen 24 und 25 bestimmt. Die Differenz zwischen den Strömen I2 und I3 muß dann als Strom I4 über den Kondensator 27, die Diode 26 und die zweite Teilinduktivität 24 fließen. Dabei ist der Strom I4 so gerichtet, daß die dem Umrichter zugewandte Platte des Kondensators 27 gegenüber der der Gleichspannung zugewandten Platte des Kondensators 27 in positiver Richtung geladen wird. Während dieser Zeit liegt an der gleichspannungsseitigen Drosselteilwicklung 24 also der zweiten Teilinduktivität eine Spannung an, die der Summe der Spannung des Kondensators 27 und der Flußspannung der Diode 26 entspricht. Die Spannung an der ersten Teilinduktivität 25 ergibt sich aus der aufgrund des Windungszahlenverhältnis der beiden Drosselteilwicklungen transformierten Spannung an der gleichspannungsseitigen Drosselteilwicklung 24. Durch diese Gegenspannung nimmt die Summe der Ströme I2 und I3 ab. Im quasistatischen Fall kann der Eingangsstrom des Umrichters I2 als nahezu konstant angesehen werden, so daß in Folge der Strom I3 langsam in etwa linear abnimmt, bis er zu Null wird. Die Diode 26 sperrt dann wieder, so daß der Drosselgesamtstrom als Summe der Ströme I2 und I3 sich zeitlich nicht mehr ändert und die Spannung über den Teilwicklungen der Drossel 24 und 25 ebenfalls gegen Null geht. Es herrscht nun ein Zustand, bei dem der Eingangsstrom des Umrichters I2 vom positiven Anschluß der Gleichspannungsquelle über den Kondensator 27 und die spannungsfreie umrichterseitige Drosselteilwicklung 25 zum positiven Anschluß des Umrichters fließt.

Wie bereits erwähnt, kann die Wirkungsweise vereinfacht so dargestellt werden, daß bei jedem Anstieg des Umrichtereingangsstrom I2 die Eingangsspannung des Systems so lange zumindest teilweise über der umrichterseitigen Drosselteilwicklung 25 abfällt, bis der ansteigende Drosselstrom das neue Niveau des Umrichtereingangsstroms I2 erreicht hat. Bei jeder Abnahme des Umrichtereingangsstroms I2 wird die überschüssige in der Drossel gespeicherte Energie in den Kondensator umgeladen. Dies hat den Vorteil, daß die Überschußenergie dem Umrichter als zusätzliche Energie zur Verfügung steht. Als effektive Eingangsspannung des Umrichters U wird die Spannung der Gleichspannungsquelle 1 um die Spannung des Kondensators 27 erhöht.

Die Ladespannung des Kondensators 27 ergibt sich aus der Energiebilanz zwischen der zurückgespeisten Energie des Entlastungsnetzwerkes (Aufladung) und dem Umrichtereingangsstrom I2 (Entladung). Die Zenerdiode 28 fungiert hier als spannungsbegrenzendes Element, das die Umrichtereingangsspannung U in definierten Grenzen hält. Die Zenerdiode sorgt dafür, daß die Spannung am Kondensator 27 nicht über einen bestimmten Grenzwert ansteigt. Damit ist gewährleistet, daß die am Umrichter anliegende Spannung U nicht über einen bestimmten Grenzwert ansteigen kann.

In dem in Figur 2 gezeigten Beispiel ist das erfindungsgemäße Entlastungsnetzwerk in die Anschlußleitung an dem positiven Pol der Gleichspannungsquelle 1 eingefügt dargestellt. Es versteht sich aber, daß das Netzwerk bei entsprechend geänderter Polarität der Diode 26 sowie gegebenenfalls der Zenerdiode 28 ebenso in die negative Anschlußleitung der Gleichspannungsquelle 1 eingefügt werden kann. Wie bereits erwähnt, muß die Begrenzungsdrossel keinen Zwischenabgriff aufweisen, sondern kann auch aus zwei getrennten Wicklungen 24 und 25 bestehen, die in geeigneter Weise verschaltet sind. Das Wicklungsverhältnis der beiden Drosselteilwicklungen 24, 25 bzw. der getrennten Induktivitäten ist im Prinzip in weiten Grenzen beliebig, die sich an der praktischen Anwendung orientieren. Durch das Windungszahlenverhältnis der zwei (Teil-)Induktivitäten können Arbeitsspannung und - strom des Umrichters auf handhabbare Werte für die Diode 26 und den Kondensator 27 transformiert werden. Für den Fall, daß die Gleichspannungsquelle 1 eine Spannung von 375 V liefert, kann mit Vorteil ein Windungszahlenverhältnis der ersten (Teil-)Induktivität 25 zu der zweiten (Teil-) Induktivität 24 von z.B. 16 zu 6 gewählt werden. Durch diese Bemessung ist sichergestellt, daß die Diode 26 nicht mit der vollen Spannung von 375 V, sondern mit einer Spannung von deutlich weniger als 200 V beaufschlagt wird. Dies ermöglicht die Verwendung von nieder sperrenden Dioden, die meist eine kürzere Sperrverzugszeit aufweisen, so daß die Arbeitsweise des Entlastungsnetzwerkes insgesamt noch weiter beschleunigt wird.

Im übrigen ist es auch möglich, das Entlastungsnetzwerk in die einzelnen Teilstränge des Umrichters einzufügen.

Wie bereits dargelegt, sorgt das in Reihe geschaltete Entlastungsnetzwerk dafür, daß bei einem plötzlichen Stromanstieg nahezu die gesamte Spannung über die Drossel 25 abfällt. Dies führt dazu, daß die Halbbrückenstränge für einen Moment praktisch spannungsfrei sind, so daß in ihnen während dieser Zeit keine Schaltverluste entstehen können.

Durch das erfindungsgemäß Entlastungsnetzwerk ist sichergestellt, daß der Strom in den Halbbrükkensträngen nicht unkontrolliert ansteigen kann. Daher muß bei der Auslegung der Ansteuersignale 17, 18, 19, 20, 21 und 22 keine Rücksicht auf Einhaltung von Sicherheitsintervallen genommen werden. Während bei den Schaltungsanordnungen nach dem Stand der Technik die Schaltgeschwindigkeit im wesentlichen über die vorgegebenen Sicherheitszeitintervalle der Ansteuersignale bestimmt werden, um die Betriebssicherheit der Brücke zu gewährleisten, kommt es bei der erfindungsgemäßen Anordnung dazu, daß sich die Schaltvorgänge der beteiligten Elemente weitgehend selbst steuern. Ursache dafür ist, daß die Entlastungsdrossel 25 den ansteigenden Strom so lange aufnimmt, bis die Transistoren und Dioden der Umrichterschaltung wieder definierte Zustände eingenommen haben. Die Schaltgeschwindigkeit kann daher so weit erhöht werden, daß sie im Grenzfall lediglich von den Materialeigenschaften der beteiligten Bauelemente abhängt. Durch die Selbststeuerung der Schaltvorgänge werden bauteilbedingte Abweichungen automatisch ausgeglichen. Die zulässige Schaltgeschwindigkeit wird durch das erfindungsgemäße Netzwerk deutlich erhöht, da ohne die Gefahr einer Zerstörung des Umrichters die Geschwindigkeitsgrenzen der verwendeten Bauelemente voll ausgenutzt werden können.

Das vorliegende erfindungsgemäße Entlastungsnetzwerk hat überdies den Vorteil, daß für die Dioden 3, 5, 7, 9, 11 und 13 auch relativ langsam sperrende Dioden verwendet werden können. Dies können dann z. B. auch die bei MOSFETs vorhandenen parasitären Diodenstrecken zwischen Source- und Drainanschluß sein, so daß separate Dioden als Bauelemente eingespart werden können. Diese parasitären Diodenstrecken haben oftmals schlechte Eigenschaften bezüglich des Sperrverhaltens und schränken daher bei ihrer Verwendung den Betrieb des Umrichters wegen erhöhter Schaltverluste ein.

Das erfindungsgemäße Entlastungsnetzwerk kommt im Gegensatz zu bisher bekannten Entlastungsnetzwerken zur Verringerung von Schaltverlusten mit vergleichbarer Leistungsfähigkeit mit einer wesentlich geringeren Anzahl von Bauelementen bzw. einer sehr einfachen Funktionsweise aus. Bekannte Schaltungen nach dem Stand der Technik beinhalten oft Schaltungen mit aktiven Hilfsschaltelementen, die mit resonanten Abläufen während des Schaltvorgangs arbeiten und zusätzliche Ansteuersignale verlangen, die oftmals zeitkritisch sind. Das erfindungsgemäße Entlastungsnetzwerk hingegen steuert sich ohne Eingriff von außen von selbst und ist lediglich als Zweipol ausgebildet, der ähnlich wie ein Vorwiderstand in Reihe in die zu schützende Leitung eingesetzt wird.

## Patentansprüche

1. Entlastungsnetzwerk für eine Umrichterschaltung bestehend aus mindestens einem Halbbrückenstrang, mit einem kapazitiven Element (27) und einer Diode (26), die in zwei parallelverlaufenden Teilsträngen des Entlastungsnetzwerkes angeordnet sind, sowie einem induktiven Element (24, 25), wobei das Entlastungsnetzwerk als Zweipol ausgebildet ist, wobei der Zweipol mit mindestens einem Halbbrückenstrang der Umrichterschaltung in Serie geschaltet ist, **dadurch gekennzeichnet, dass** das Netzwerk, abgesehen von den Zuleitungswiderständen, keinerlei Ohmsche Widerstände enthält und daß das induktive Element (24, 25) durch einen Zwischenabgriff in zwei Teilinduktivitäten aufgeteilt ist oder aus zwei getrennten, magnetisch gekoppelten und entsprechend verschalteten induktiven Elementen besteht, wobei die erste (Teil-)Induktivität (25) in Reihe mit den parallel verlaufenden Teilsträngen geschaltet ist, wobei der eine Teilstrang das kapazitive Element (27) aufweist und der andere Teilstrang aus einer Reihenschaltung der Diode (26) mit der zweiten (Teil-)Induktivität (24) besteht.

2. Entlastungsnetzwerk nach Anspruch 1, **dadurch gekennzeichnet, daß** die Diode (26) derart gepolt ist, daß bei einem Anstieg des Stromflusses in der Umrichterschaltung ein Stromfluß in der zweiten (Teil-)Induktivität (24) verhindert ist.

3. Entlastungsnetzwerk nach einem der Ansprüche 1 bis 2, **dadurch gekennzeichnet, daß** mindestens ein spannungsbegrenzendes Element (28), vorzugsweise eine Zenerdiode, auf mindestens einem weiteren Teilstrang angeordnet ist, der parallel zu den beiden ersten Teilsträngen verläuft.

4. Entlastungsnetzwerk nach einem der Ansprüche 1 bis 3, **dadurch gekennzeichnet, daß** es ausschließlich aus passiven bzw. ungesteuerten Elementen besteht.

5. Entlastungsnetzwerk nach einem der Ansprüche 1 bis 4, **dadurch gekennzeichnet, daß** die beiden (Teil-)Induktivitäten (24, 25) aus Spulen bestehen, wobei die erste (Teil-)Induktivität (25) n Windungen und die zweite (Teil-)Induktivität m Windungen aufweist, wobei die (Teil-)Induktivität 25 im Bereich von etwa 5 bis 50 µH liegt und n etwa gleich m oder bis zu fünfmal so groß wie m ist.

6. Entlastungsnetzwerk nach Anspruch 5, **dadurch gekennzeichnet, daß** n zwischen dem 1,5- und 3-fachen von m liegt.

7. Entlastungsnetzwerk nach Anspruch 6, **dadurch gekennzeichnet, daß** das Verhältnis n/m etwa 2,5 und insbesondere etwa 16/6 beträgt.

## Claims

1. Recovery network for a converter circuit consisting of at least one half-bridge strand, with one capacitive element (27) and a diode (26) which are disposed in two parallel part strands of the recovery network, as well as an inductive element (24, 25), said recovery network being formed as a dipole, said dipole being connected in series with at least one half-bridge strand of the converter circuit, **characterized in that**, apart from conductor resistivities, the network does not contain any ohmic resistance and that the inductive element (24, 25) is subdivided into two partial inductivities by means of an intermediate tap or consists of two separate, magnetically coupled and correspondingly connected inductive elements, the first (partial) inductivity (25) being connected in series with the parallel part strands, wherein one part strand comprises the capacitive element (27) and the other part strand consists of a serial connection of the diode (26) with the second (partial) inductivity (24).

2. Recovery network in accordance with claim 1, **characterized in that** the diode (26) is poled such that in case of an increase of the current flow in the converter circuit, current flow in the second (partial) inductivity (24) is prevented.

3. Recovery network in accordance with any of claims 1 to 2, **characterized in that** at least one voltage-limiting element (28), preferably a Zener diode, is disposed on at least one further part strand that is parallel to the first two part strands.

4. Recovery network in accordance with any of claims 1 to 3, **characterized in that** it exclusively consists of passive or uncontrolled elements.

5. Recovery network in accordance with any of claims 1 to 4, **characterized in that** the two (partial) inductivities (24, 25) consist of coils, said first (partial) inductivity (25) having n windings and said second (partial) inductivity having m windings, wherein the (partial) inductivity (25) is in the range of about 5 to 50 µH and n is about equal to or up to five times greater than m.

6. Recovery network in accordance with claim 5, **characterized in that** n is between 1.5 and 3 times m.

7. Recovery network in accordance with claim 6, **characterized in that** the ratio n/m amounts to about 2.5 and particularly about 16/6.

## Revendications

1. Réseau de décharge d'un circuit survolteur constitué d'au moins une branche formant demi-pont qui possède un élément capacitif (27) et une diode (26), disposés dans deux portions de branche agencées en parallèle du réseau de décharge, ainsi qu'un élément inductif (24, 25), le réseau de décharge étant conformé en dipôle, le dipôle étant monté en série avec au moins une branche formant demi-pont du circuit survolteur, **caractérisé en ce que** le réseau ne contient aucune résistance ohmique à l'exception des résistances des conducteurs d'alimentation, et **en ce que** l'élément inductif (24, 25) est divisé en deux inductances partielles par un branchement intermédiaire ou est constitué de deux éléments inductifs séparés, couplés magnétiquement et câblés en correspondance, la première inductance (partielle) (25) étant montée en série avec les portions de branche agencées en parallèle, l'une des portions de branche comportant l'élément capacitif (27) l'autre portion de branche étant constituée de la diode (26) montée en série avec la deuxième inductance (partielle) (24).

2. Réseau de décharge selon la revendication 1, **caractérisé en ce que** la diode (26) est polarisée de telle sorte que, lorsque le flux de courant augmente dans le circuit survolteur, un flux de courant est empêché dans la deuxième inductance (partielle) (24).

3. Réseau de décharge selon l'une des revendications 1 à 2, **caractérisé en ce qu'**au moins un élément limiteur de tension (28), avantageusement une diode Zener, est disposé dans au moins une autre portion de branche qui est agencée en parallèle avec les deux premières portions de branche.

4. Réseau de décharge selon l'une des revendications 1 à 3, **caractérisé en ce qu'**il est exclusivement constitué d'éléments passifs ou non commandés.

5. Réseau de décharge selon l'une des revendications 1 à 4, **caractérisé en ce que** les deux inductances (partielles) (24, 25) sont constituées de bobines, la première inductance (partielle) (25) comportant n enroulements et la deuxième inductance (partielle) comportant m enroulements, l'inductance (partielle) (25) étant de l'ordre d'environ 5 à 50 µH et n étant à peu près égal à m ou a une valeur pouvant atteindre 5 fois la valeur de m.

6. Réseau de décharge selon la revendication 5, **caractérisé en ce que** la valeur de n est comprise entre 1,5 fois et 3 fois la valeur de m.

7. Réseau de décharge selon la revendication 6, **caractérisé en ce que** le rapport n/m est égal à environ 2,5 et notamment à environ 16/6.
